# EUROPEAN PATENT APPLICATION

(11) **EP 2 120 355 A2**
(43) Date of publication of application: **18.11.2009**
(21) Application number: 08172964.2
(22) Date of filing: 29.12.2008
(51) Int. Cl.: H04B 1/707

(54) **Rake receiving device, base station apparatus, reception control method, and reception control program**

(30) Priority: 13.05.2008 JP 2008126255
(71) Applicant: Fujitsu Limited, Kawasaki-shi, Kanagawa 211-8588 (JP)
(72) Inventor: Hikita, Masahiko, Kawasaki-shi Kanagawa 211-8588 (JP)
(74) Representative: Fenlon, Christine Lesley

(57) **Abstract**

When receiving digital data from a signal receiving unit, a rake receiving unit stores the received digital data on a memory. Then, when receiving path timing from a delay amount/path number detecting unit, the rake receiving unit determines a read address that is a position for starting reading, based on the path timing. Subsequently, the rake receiving unit starts reading from the determined read address, and carries out a de-spreading process.

## Description

### CROSS-REFERENCE TO RELATED APPLICATIONS

This application is based upon and claims the benefit of priority of the prior Japanese Patent Application No. 2008-126255, filed on May 13, 2008, the entire contents of which are incorporated herein by reference.

### BACKGROUND

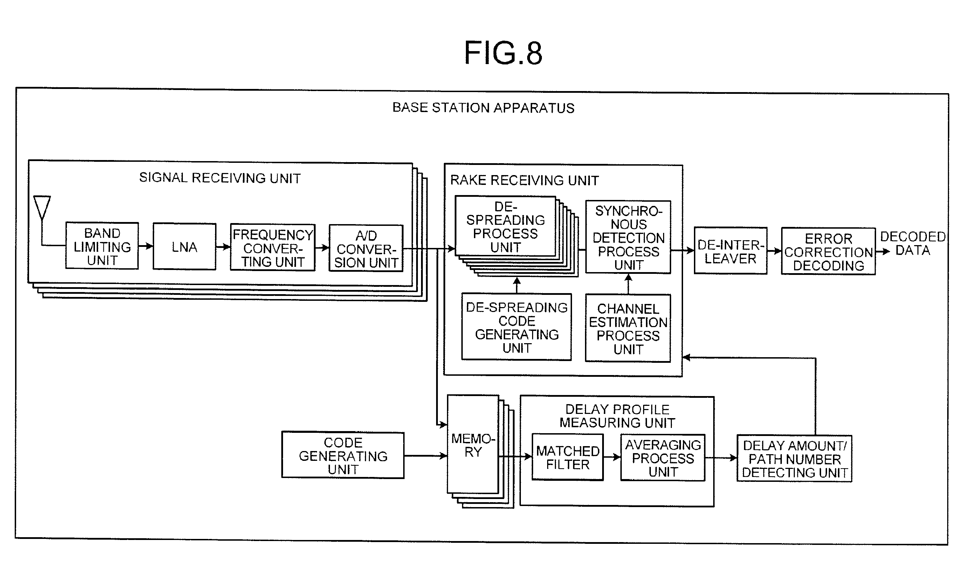

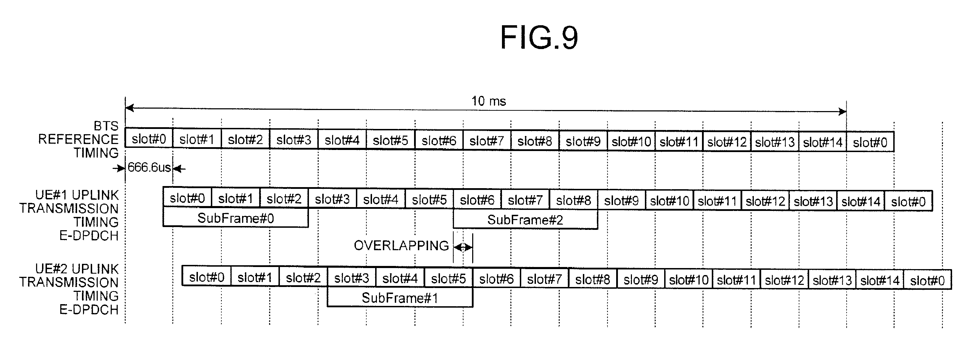

1. Field
   The present invention relates to a rake receiving device that receives data transmitted from UE (User Equipment), a base station apparatus, a reception control method, and a reception control program.
2. Description of the Related Art
   W-CDMA (Wideband Code Division Multiple Access) has been known conventionally as one of communication methods conforming to 3GPP (Third Generation Partnership Project). A rake receiving device is adopted and incorporated in a W-CDMA communication system, especially in a base station apparatus and a mobile station, for multipath reception (see Japanese Patent Application Laid-open Nos. 2000-244455 and 2004-533176).
   In EUL (Enhanced Uplink) or HSUPA (High Speed Uplink Packet Access) that is the uplink high-speed packet transmission standard provided as an extension of W-CDMA, E-DPCH, which is the overall name referring also to E-DPDCH (E-DCH (Enhanced Dedicated Channel) Dedicated Physical Data Channel) and E-DPCCH (E-DCH Dedicated Physical Control Channel), is used as an uplink physical channel through which uplink high-speed packet transmission is carried out.
   In an uplink physical channel for data communication (E-DPDCH as one type of E-DPCH), transmission timing is controlled in 3 slots or 15 slots (sub-frame by sub-frame in every 10 ms) so that uplink data from UE (User Equipment) do not collide against each other. Data transmitted from UE are received by a rake receiving device in a base station apparatus. Specifically, at the rake receiving device, a plurality of de-spreading process circuits carry out a de-spreading process sequentially on reception data from the EU to execute a real-time rake reception process (see Fig. 8).
   According to the above conventional technique, the transmission timing of uplink data from UE is controlled to avoid collision between uplink data from one EU and the same from another EU. Depending on the distance between EU and the base station apparatus, however, uplink data may overlap each other due to time of delay of radio waves arriving at the base station apparatus (see Fig. 9). In such a case, properly receiving data overlapping portions in real time by the rake reception process requires a plurality of rake receiving circuits, which poses a problem of an increase in a circuit size.

### SUMMARY

It is desirable to at least partially solve the problems in the conventional technology.

According to an embodiment of a first aspect of the present invention, a rake receiving device includes a reception data storage unit that stores therein reception data transmitted in a predetermined unit; a write control unit that when receiving the reception data, carries out control to write the reception data sequentially in the reception data storage unit; a read control unit that acquires path timing representing timing of arrival of the reception data to carry out control based on the path timing to read the stored reception data from the reception data storage unit; and a de-spreading process unit that carries out a de-spreading process on the reception data read out by the read control unit.

According to an embodiment of a second aspect of the present invention, a base station apparatus includes a reception data storage unit that has stored therein reception data transmitted in a predetermined unit; a write control unit that when receiving the reception data, carries out control to write the reception data sequentially in the reception data storage unit; a delay profile measuring unit that measures a delay profile of the reception data; a path timing detecting unit that calculates a delay amount and the number of paths from the delay profile measured by the delay profile measuring unit to detect path timing; a read control unit that based on the path timing detected by the path timing detecting unit, carries out control to read the stored reception data from the reception data storage unit; and a de-spreading process unit that carries out a de-spreading process on the reception data read out by the read control unit.

According to an embodiment of a third aspect of the present invention, a reception control method includes storing reception data transmitted in a predetermined unit in a reception data storage unit; carrying out, when receiving the reception data, control to write the reception data sequentially in the reception data storage unit; acquiring path timing representing timing of arrival of the reception data to carry out control based on the path timing to read the stored reception data from the reception data storage unit; and carrying out a de-spreading process on the reception data read from the reception data storage unit.

According to an embodiment of a fourth aspect of the present invention, a computer program product causes a computer to perform a method embodying the present invention.

According to an embodiment of a fifth aspect of the present invention, a rake receiving circuit includes a reception data storage unit that stores therein reception data transmitted in a predetermined unit; a write control unit that when receiving the reception data, carries out control to write the reception data sequentially in the reception data storage unit; a read control unit that acquires path timing representing timing of arrival of the reception data to carry out control based on the path timing to read the stored reception data from the reception data storage unit; and a de-spreading process unit that carries out a de-spreading process on the reception data read out by the read control unit.

Advantages of the invention (embodiment) will be set forth in part in the description which follows, and in part will be apparent from the description, or may be learned by practice of the invention. Advantages of the invention may be realized and attained by means of the elements and combinations particularly pointed out in the appended claims.

It is to be understood that both the foregoing general description and the following detailed description are exemplary and explanatory only and are not restrictive of the invention, as claimed.

### BRIEF DESCRIPTION OF THE DRAWINGS

Fig. 1 is a block diagram of a configuration of a base station apparatus of a first embodiment;
Fig. 2 is an explanatory view of a process of measuring a delay profile;
Fig. 3 is a diagram of an example of a time chart of a write/read process on a memory in a rake receiving unit;
Fig. 4 is an explanatory view of a process of absorbing data overlapping between UEs to read out uplink data;
Fig. 5 is a diagram of a detailed configuration of the memory and a de-spreading process unit in the rake receiving unit;
Fig. 6 is a flowchart of processing operation by the rake receiving unit in the base station apparatus of the first embodiment;
Fig. 7 is a diagram of a computer that executes the function of a rake receiving device;
Fig. 8 is an explanatory view of a conventional technique; and
Fig. 9 is an explanatory view of a conventional technique.

### DETAILED DESCRIPTION OF THE PREFERRED EMBODIMENTS

Exemplary embodiments of a rake receiving device, a base station apparatus, a reception control method, and a reception control program according to the present invention will now be described in detail with reference to the accompanying drawings.

In the following description, a configuration of a base station apparatus and a process flow according to a first embodiment will be described in order, and, lastly, an effect achieved by the first embodiment will be described. The following description will be made of an instance that the present invention is applied to a base band receiving unit of an EUL (Enhanced Uplink) base station apparatus, which is a W-CDMA base station apparatus that handles additional high-speed packet transmission.

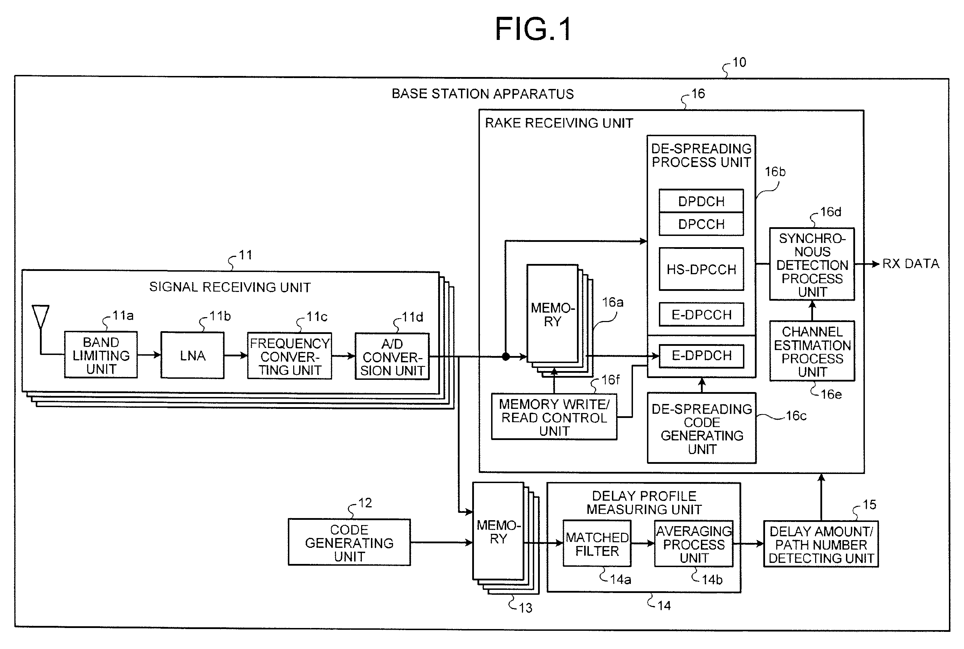

A configuration of a base station apparatus 10 will be described referring to Fig. 1. Fig. 1 is a block diagram of the configuration of the base station apparatus 10 of the first embodiment. As shown in Fig. 1, the base station apparatus 10 includes a signal receiving unit 11, a code generating unit 12, a memory 13, a delay profile measuring unit 14, a delay amount/path number detecting unit 15, and a rake receiving unit 16. Processes carried out by these units will be described.

The signal receiving unit 11 receives a reception signal (analog signal) from UE (User Equipment such as a mobile terminal) via an antenna, which reception signal is uplink data having undergone a de-spreading process. The signal receiving unit 11 has a band limiting unit 11a, an LNA (Low Noise Amplifier) 11b, a frequency converting unit 11c, and an A/D (Analog/Digital) conversion unit 11d.

The band limiting unit 11a carries out a band limiting process to limit the frequency band of an analog signal received by the antenna, and then inputs the analog signal to the LNA 11b. The LAN 11b is an amplifier showing a small noise index, amplifying the analog signal input from the band limiting unit 11a and inputs the amplified analog signal to the frequency converting unit 11c.

The frequency converting unit 11c mixes a plurality of input signals. Specifically, the frequency converting unit 11c mixes the analog signal input from the LNA 11b with a local oscillation signal input from a local oscillator (not shown) to converts the analog signal into a signal of a base band frequency and inputs the converted signal to the A/D conversion unit 11d.

The A/D conversion unit 11d carries out A/D conversion on an analog signal. Specifically, the A/D conversion unit 11d carries out A/D conversion on the analog signal input to the frequency converting unit 11c to convert the analog signal into digital data. The A/D conversion unit 11d then stores the converted digital data on the memory 13 disposed in the front stage to the delay profile measuring unit 14 and on a memory 16a disposed in the front stage to a de-spreading process unit 16b. When a received signal is other than an E-DPDCH signal (e.g., any one of a DPDCH (Dedicated Physical Data Channel) signal, DPCCH (Dedicated Physical Control Channel) signal, HS-DPCCH (High Speed Dedicated Physical Control Channel) signal, and E-DPCCH signal), the A/D conversion unit 11d does not store the received signal on the memory 16a, but directly informs the de-spreading process unit 16b of the received signal.

The code generating unit 12 receives information indicative of a scrambled code (extension code) corresponding to a UE having transmitted the analog signal, from a superior device (not shown), and generates the scrambled code based on the received information to store the code on the memory 13. The delay profile measuring unit 14, which will be described later, is capable of identifying a transmitter UE having transmitted a signal, based on a scrambled code generated by the code generating unit 12.

The memory 13 has a memory area allocated for each antenna, and stores therein the digital data converted by the A/D conversion unit 11d and the scrambled code generated by the code generating unit 12.

The delay profile measuring unit 14 has a delay profile measuring circuit, and measures a delay profile for each reception antenna. Specifically, the delay profile measuring unit 14 has a matched filter (correlater) 14a and an averaging process unit 14b, and measures the delay profile using the digital data and scrambled code stored on the memory 13.

The matched filter 14a calculates the correlation between the digital data and the scrambled code, and outputs a matched number as a detected correlation value level used for detecting a path, to the averaging process unit 14b. The averaging process unit 14b carries out an averaging process longer in time than an averaging process for detection/demodulation (i.e., averaging process for eliminating a factor caused by phasing, such as median fluctuation in a short section and instantaneous value fluctuation) on the correlation value level output from the matched filter 14a. The averaging process unit 14b then measures the delay profile and informs the delay amount/path number detecting unit 15 of the delay profile.

The delay amount/path number detecting unit 15 calculates a delay amount and the number of paths from the delay profile to detect path timing. Specifically, the delay amount/path number detecting unit 15 detects the path timing (time of arrival) of "uplink data" transmitted from the UE from the delay profile informed of by the averaging process unit 14b, and informs the rake receiving unit 16 of the path timing.

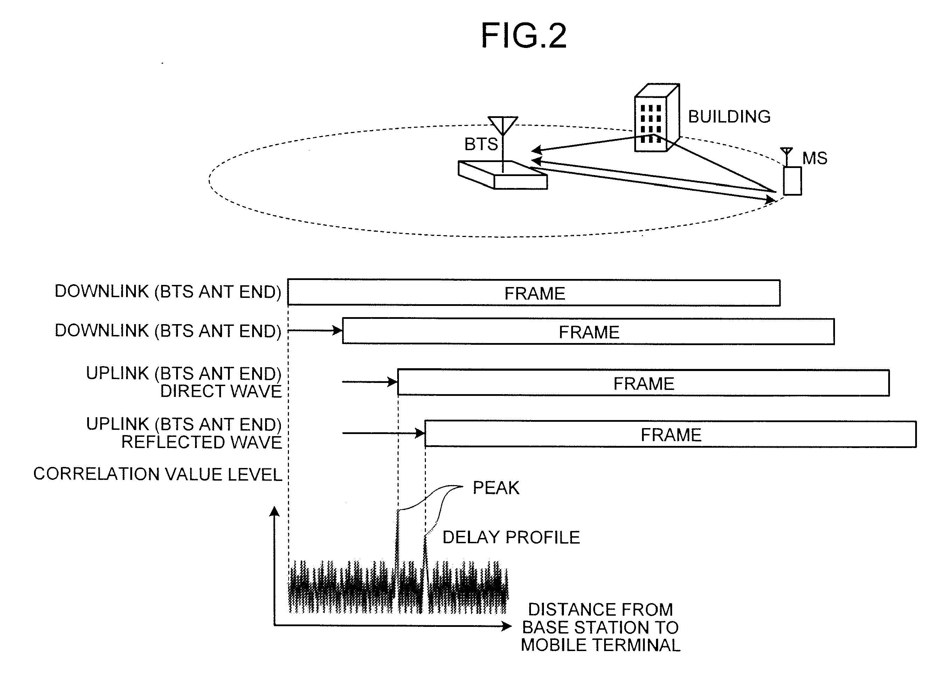

In a case of Fig. 2, the delay amount/path number detecting unit 15 detects peaks at which correlation value levels of the delay profile are equal to or more than a given threshold. The delay amount/path number detecting unit 15 then calculates the number of paths from the number of peaks (two paths (direct wave and reflected wave) are shown in Fig. 2), and calculates each delay amount from each of peak positions to detect each path timing. The detected path timing is used by a memory write/read control unit 16f, which will be described later, as timing to start reading from the memory 16a.

The rake receiving unit 16 has a rake receiving circuit that separates de-spreading signals by a de-spreading process and that weights the separated de-spreading signals individually to synthesize the weighted de-spreading signals. The rake receiving unit 16 has the memory 16a, the de-spreading process unit 16b, a de-spreading code generating unit 16c, a synchronous detection process unit 16d, and a channel estimation process unit 16e.

The memory 16a has a memory area allocated for a given number of slots that is disposed in the front stage to a de-spreading circuit. The memory 16a stores therein digital data through uplink E-DPDCH that is transmitted in a given unit. Specifically, the memory 16a stores therein digital data through uplink E-DPDCH that is input from the A/D conversion unit 11d. The given number of slots means the number of slots sufficient for absorbing a delay.

When receiving digital data, the memory write/read control unit 16f carries out control to write the digital data sequentially to the memory 16a. The memory write/read control unit 16f acquires path timing, which is timing of arrival of reception data, and carries out control to read out reception data stored on the memory 16a, based on the path timing.

Specifically, the memory write/read control unit 16f determines whether path timing has been received from the delay amount/path number detecting unit 15. When determining that the path timing has been received, the memory write/read control unit 16f determines a read address that is a position for starting reading, based on the received path timing. The memory write/read control unit 16f then controls a readout process by the de-spreading process unit 16b so that the de-spreading process unit 16b starts reading from the determined read address.

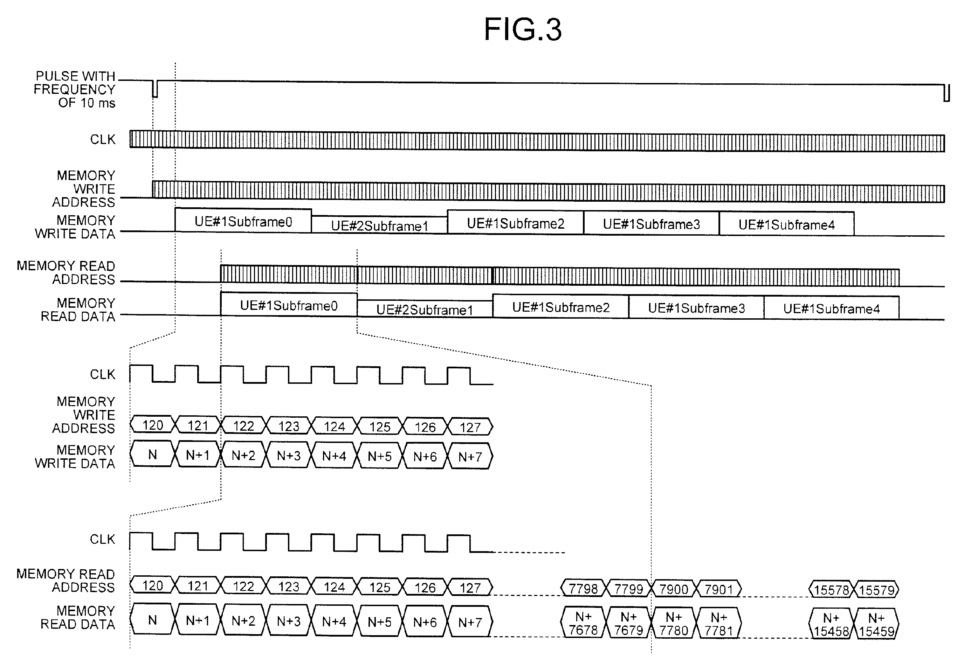

A read/write process on the memory 16a will be described specifically referring to a case of Fig. 3. As shown in Fig. 3, the memory write/read control unit 16f starts counting memory write addresses to which digital data is to be written (with a memory write address "120" counted first in Fig. 3), using a BTS reference pulse (10 ms in period).

Upon receiving path timing, the memory write/read control unit 16f determines a memory read address that is a position for starting reading, based on the path timing, and starts reading (with the memory write address "120" read first in Fig. 3).

This means that the memory read address that is the position for starting reading changes according to path timing. For example, in Fig. 3, when memory read data "UE#2Subframe1" is read after memory read data "UE#2Subframe0" is read, it indicates that addresses are read out discontinuously (because a memory read address "7900" is read after a memory read address "7799" is read).

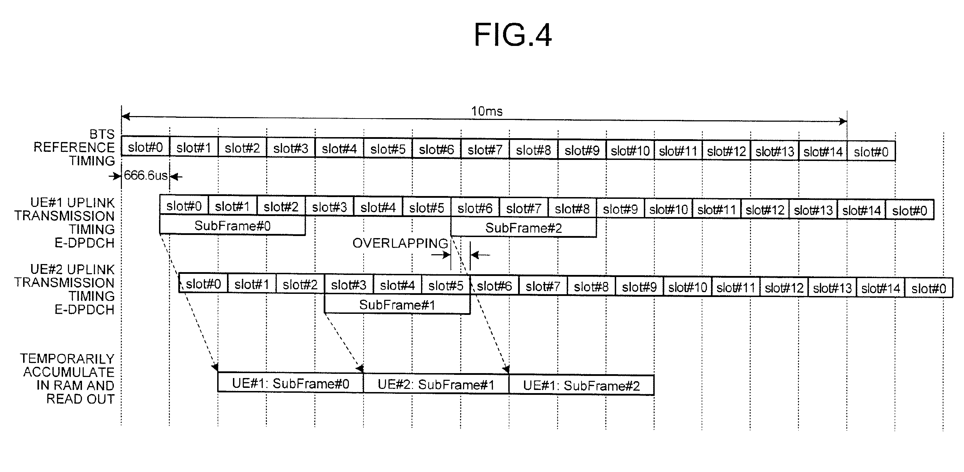

As shown in Fig. 4, because the memory 16a accumulating digital data is disposed in the front stage to the de-spreading process unit 16b, even if uplink data from UE overlap, the overlapping data is stored temporarily on the memory 16a and are read out as the data with arranging phases to the de-spreading process unit 16b. As a result, the rake receiving unit 16 is able to absorb data overlapping without increasing a circuit size.

The de-spreading process unit 16b carries out the de-spreading process on digital data read out of the memory 16a. Specifically, the de-spreading process unit 16b reads digital data out of the memory 16a based on a read address (read starting position) determined by the memory write/read control unit 16f, and carries out the de-spreading process on the read out data.

The de-spreading process unit 16b has a de-spreading circuit conforming to 3GPP Release7, a de-spreading circuit conforming to 3GPP Release1999, and de-spreading circuit conforming to 3GPP Release5, which are set parallel with each other. When the read data is reception data through DPCH, the de-spreading process unit 16b carries out the de-spreading process conforming to 3GPP Release1999 on the reception data through DPCH, using the de-spreading circuit conforming to 3GPP Release1999. When the read data is reception data through HS-DPCH, the de-spreading process unit 16b carries out the de-spreading process conforming to 3GPP Release5 on the reception data through HS-DPCH, using the de-spreading circuit conforming to 3GPP Release5.

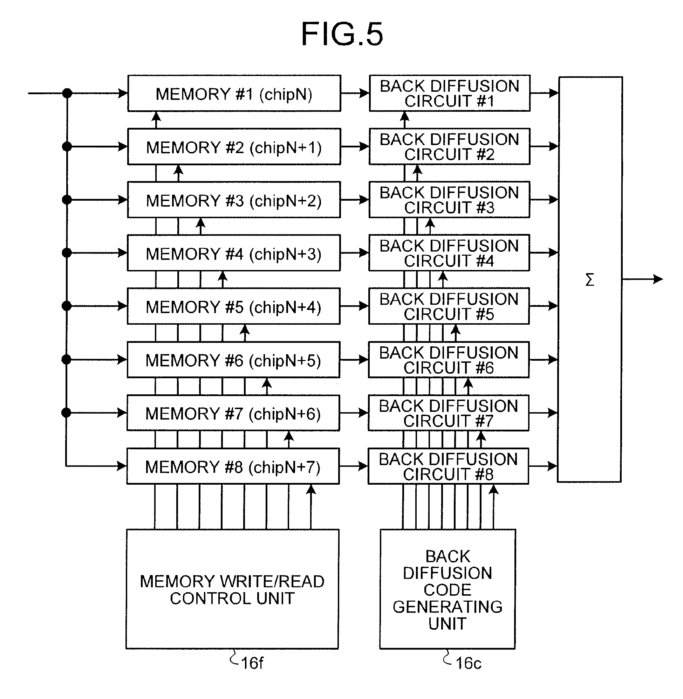

A detailed configuration of the memory 16a and the de-spreading process unit 16b in the rake receiving unit 16 will then be described referring to Fig. 5. As shown in Fig. 5, the rake receiving unit 16 has "de-spreading circuits #1 to #8" that correspond to "memories #1 to #8", respectively. With this configuration, the rake receiving unit 16 carries out the de-spreading process for eight chips in parallel to increase a de-spreading process rate per given unit time (e.g., 3.84 MHz per chip). The rake receiving unit 16 thus carries out the de-spreading process in parallel on a plurality of digital data groups to increase a multiprocessing rate per unit time by eight times. This makes it possible for one hardware block to carry out the de-spreading process simultaneously on eight UE uplink data groups.

The de-spreading code generating unit 16c generates a de-spreading code and informs the de-spreading process unit 16b of the generated code. The synchronous detection process unit 16d corrects a shift in the phase of a digital signal using a phase rotation rate informed of from the channel estimation process unit 16e, and outputs RX data to a de-interleaver (not shown). The channel estimation process unit 16e measures a phase rotation rate to inform the synchronous detection process unit 16d of the phase rotation rate.

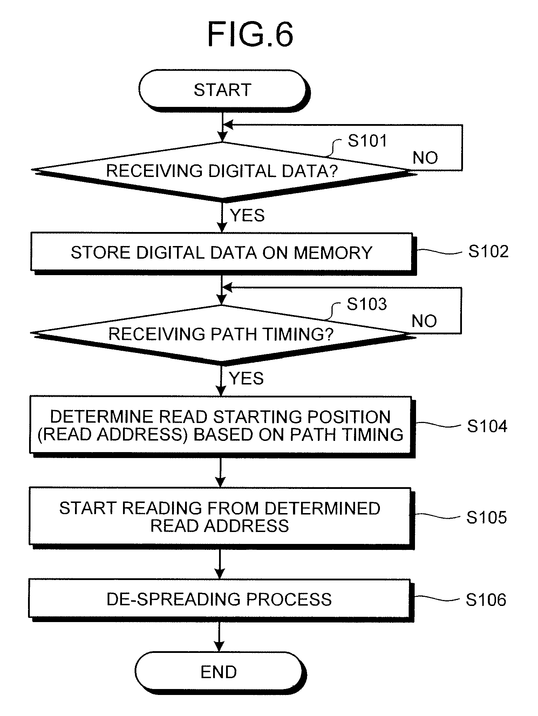

An operation of the rake receiving unit in the base station apparatus of the first embodiment will then be described referring to Fig. 6. Fig. 6 is a flowchart of processing operation by the rake receiving unit in the base station apparatus of the first embodiment.

As shown in Fig. 6, when receiving digital data from the signal receiving unit 11 (Yes at step S101), the rake receiving unit 16 in the base station apparatus 10 stores the received digital data on the memory 16a (step S102). The rake receiving unit 16 then determines whether path timing has been received from the delay amount/path number detecting unit 15 (step S103).

When determining that the path timing has been received (Yes at step S103), the rake receiving unit 16 determines a read address that is a position for starting reading, based on the path timing (step S104). Subsequently, the rake receiving unit 16 starts reading from the determined read address (step S105) to carry out the de-spreading process (step S106).

As described above, the base station apparatus 10 includes the memory 16a accumulating digital data that is disposed in the front stage to the de-spreading process unit 16b. Because of this, even if uplink data from UE overlap, the overlapping data are stored temporarily on the memory 16a and are read out with arranging phases to the de-spreading process unit 16b. As a result, the rake receiving unit 16 is able to absorb data overlapping without increasing a circuit size, which enables a reduction in a circuit size.

According to the first embodiment, the de-spreading process conforming to 3GPP Release7 is carried out on reception data through uplink E-DPDCH that is read out of the memory 16a. This enables execution of the proper de-spreading process on the reception data through uplink E-DPDCH.

According to the first embodiment, when reception data through DPCH is received, the de-spreading process conforming to 3GPP Release1999 is carried out on the reception data through DPCH. This enables execution of the parallel de-spreading process on the reception data through DPCH.

According to the first embodiment, when reception data through HS-DPCH is received, the de-spreading process conforming to 3GPP Release5 is carried out on the reception data through HS-DPCH. This also enables execution of the parallel de-spreading process on the reception data through HS-DPCH.

According to the first embodiment, the de-spreading process is carried out in parallel on a plurality of received data groups. This increases a multiprocessing rate per unit time, which, for example, makes it possible for one hardware block to carry out the de-spreading process simultaneously on a plurality of UE uplink data groups.

While the embodiment of the present invention has been described so far, the present invention may be implemented in various forms of embodiments other than the above embodiment. A second embodiment as another embodiment of the present invention will then be described.

In the first embodiment, the memory 16a is disposed in the rake receiving unit 16. The present invention, however, is not limited to this configuration. For example, the memory 16a may be provided as an externally attached SDRAM (with a single/dual port), or may be substituted by a memory block inside an FPGA.

The constituent elements of the above devices are depicted as functional constituent elements in the drawings, and need not necessarily be physically configured in the manner as in the drawings. In other words, a specific form of distribution and integration of the devices is not limited to the form depicted in the drawings, but some or all of the devices may be physically distributed or integrated in arbitrary grouping depending on various loads and use conditions. For example, the memory write/read control unit 16f may be distributed into a memory write control unit and a memory read control unit. The whole or some of the processing functions executed by the devices are achieved by a CPU and through a program that is analyzed and executed at the CPU, or may be achieved in the form of hardware under wired logic control.

Among the processes described in the present embodiments, all or some of the processes to be carried out automatically may be carried out manually, or all or some of the processes to be carried out manually may be carried out automatically by a known method. In addition, information containing process procedures, control procedures, specific names, and various data and parameters that are shown in the present specification and in the drawings may be altered arbitrary unless a special note is made against the alteration.

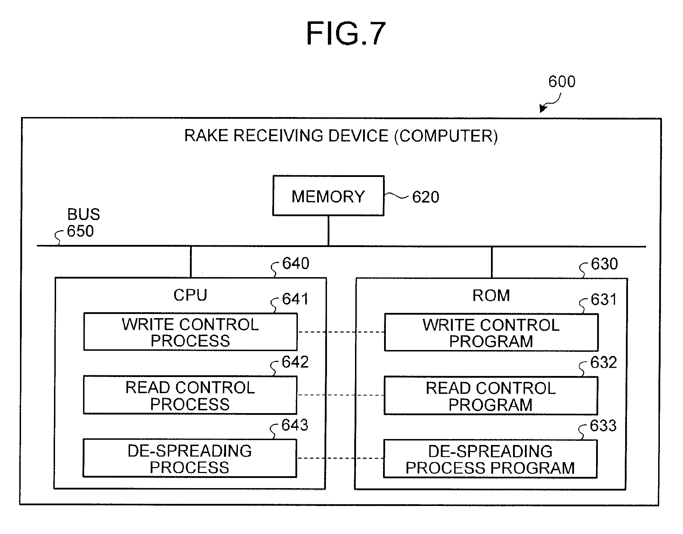

Various processes described in the above embodiments can be achieved by executing a prepared program on a computer. An example of a computer that executes a program having the same functions as the functions described in the above embodiments will then be described referring to Fig. 7. Fig. 7 depicts a computer that executes a reception control program.

As shown in Fig. 7, a computer 600 serving as the rake receiving device includes a memory 620, a ROM 630, and a CPU 640, which are interconnected via a bus 650.

The ROM 630 has reception control programs stored thereon, which exert the same functions as described in the above embodiments. Specifically, as shown in Fig. 7, the ROM 630 has stored in advance thereon a write control program 631, a read control program 632, and a de-spreading process program 633. These programs 631 to 633 may be integrated or distributed properly in the same manner as the constituent elements of the rake receiving unit 16 of Fig. 1.

The CPU 640 reads these programs 631 to 633 out of the ROM 630 to execute the programs. This causes the write control program 631, the read control program 632, and the de-spreading process program 633 to function as a write control process 641, a read control process 642, and a de-spreading process 643, respectively. The write control process 641 and read control process 642 and the de-spreading process 643 correspond to the memory write/read control unit 16f and the de-spreading process unit 16b, respectively.

Reception data through uplink E-DPDCH sent from individual UE is stored on the memory 620, which corresponds to the memory 16a of Fig. 1. The CPU 640 reads the reception data out of the memory 620 to execute the de-spreading process.

A device embodying the present invention can enable a circuit size to be reduced.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

All examples and conditional language recited herein are intended for pedagogical purposes to aid the reader in understanding the principles of the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present invention(s) has(have) been described in detail, it should be understood that the various changes, substitutions, and alterations could be made hereto without departing from the spirit and scope of the invention.

## Claims

1. A rake receiving device comprising:
a reception data storage unit that stores therein reception data transmitted in a predetermined unit;
a write control unit that when receiving the reception data, carries out control to write the reception data sequentially in the reception data storage unit;
a read control unit that acquires path timing representing timing of arrival of the reception data to carry out control based on the path timing to read the stored reception data from the reception data storage unit; and
a de-spreading process unit that carries out a de-spreading process on the reception data read out by the read control unit.

2. The rake receiving device according to claim 1, wherein
when the reception data through uplink E-DPDCH has been received, the de-spreading process unit carries out a de-spreading process conforming to 3GPP Release7 on the reception data through uplink E-DPDCH that is read out by the read control unit.

3. The rake receiving device according to claim 1, wherein
when the reception data through DPCH has been received, the de-spreading process unit carries out a de-spreading process conforming to 3GPP Release1999 on the reception data through DPCH.

4. The rake receiving device according to claim 1, wherein when the reception data through HS-DPCH has been received, the de-spreading process unit carries out a de-spreading process conforming to 3GPP Release5 on the reception data through HS-DPCH.

5. The rake receiving device according to any preceding claim, wherein the de-spreading process unit carries out a de-spreading process in parallel on a plurality of reception data groups.

6. A base station apparatus comprising:
a reception data storage unit that has stored therein reception data transmitted in a predetermined unit;
a write control unit that when receiving the reception data, carries out control to write the reception data sequentially in the reception data storage unit;
a delay profile measuring unit that measures a delay profile of the reception data;
a path timing detecting unit that calculates a delay amount and the number of paths from the delay profile measured by the delay profile measuring unit to detect path timing;
a read control unit that based on the path timing detected by the path timing detecting unit, carries out control to read the stored reception data from the reception data storage unit; and
a de-spreading process unit that carries out a de-spreading process on the reception data read out by the read control unit.

7. A reception control method comprising:
storing reception data transmitted in a predetermined unit in a reception data storage unit;
carrying out, when receiving the reception data, control to write the reception data sequentially in the reception data storage unit;
acquiring path timing representing timing of arrival of the reception data to carry out control based on the path timing to read the stored reception data from the reception data storage unit; and
carrying out a de-spreading process on the reception data read from the reception data storage unit.

8. A computer program product having a computer-readable recording medium that stores therein a computer program that controls a receiving operation, the computer program causing a computer to execute:
storing reception data transmitted in a predetermined unit in a reception data storage unit;
carrying out, when receiving the reception data, control to write the reception data sequentially in the reception data storage unit;
acquiring path timing representing timing of arrival of the reception data to carry out control based on the path timing to read the stored reception data from the reception data storage unit; and
carrying out a de-spreading process on the reception data read from the reception data storage unit.

9. A rake receiving circuit comprising:
a reception data storage unit that stores therein reception data transmitted in a predetermined unit;
a write control unit that when receiving the reception data, carries out control to write the reception data sequentially in the reception data storage unit;
a read control unit that acquires path timing representing timing of arrival of the reception data to carry out control based on the path timing to read the stored reception data from the reception data storage unit; and
a de-spreading process unit that carries out a de-spreading process on the reception data read out by the read control unit.
